# EUROPÄISCHE PATENTANMELDUNG

(11) **EP 2 265 083 A2**
(43) Veröffentlichungstag der Anmeldung: **22.12.2010**
(21) Anmeldenummer: 10006049.0
(22) Anmeldetag: 11.06.2010
(51) Int. Cl.: H04W 88/02

(54) **Schaltung und Verfahren zum Betrieb eines Knotens in einem Funknetz**

(30) Priorität: 18.06.2009 DE 102009029783
(71) Anmelder: Atmel Automotive GmbH, 74072 Heilbronn (DE)
(72) Erfinder: Ferchland, Tilo, Dipl.-Ing., 01277 Dresden (DE); Walter, Udo, 01307 Dresden (DE); Schneider, Soeren, 01309 Dresden (DE)
(74) Vertreter: Müller, Wolf-Christian

(57) **Zusammenfassung**

Schaltung und Verfahren zum Betrieb eines Knotens in einem Funknetz, wobei Knoten desselben Funknetzes eine gemeinsame Netzkennung (NWID) und jedem Knoten individuell eine Knotenkennung (KNID) zugeordnet ist,
- bei dem während des Empfangs eines aktuellen Pakets (100) durch eine Empfangsschaltung (310) des Knotens eine im Paket (100) enthaltene Adresse (160) ermittelt wird,
- bei dem ein Empfang des aktuellen Pakets (100) fortgesetzt wird, wenn die ermittelte Adresse (160) mit der Netzkennung (NWID) des Knotens und der Knotenkennung (KNID) des Knotens übereinstimmt,
- bei dem während des Empfangs des aktuellen Pakets (100) der Empfang des aktuellen Pakets abgebrochen und anhand einer Fallentscheidung die Empfangsschaltung (310) gesteuert wird, wenn die ermittelte Adresse (160) mit der Netzkennung (NWID) des Knotens oder der Knotenkennung (KNID) des Knotens nicht übereinstimmt.

## Beschreibung

Die vorliegende Erfindung betrifft eine Schaltung eines Knotens in einem Funknetz und ein Verfahren zum Betrieb eines Knotens ein einem Funknetz.

In dem Industrie-Standard IEEE 802.15.4-2006 ist ein Funknetz definiert. Dabei sind in dem Standard auf Seite 21 bis 23 per Funk zu übertragende Pakete (engl. packet) definiert, die unterschiedliche Rahmen (engl. frame), wie beispielsweise einen so genannten beacon frame, einen data frame, einen acknowledgement frame oder einen MAC command frame enthalten können.

Der Erfindung liegt die Aufgabe zu Grunde ein Verfahren zum Betrieb eines Knotens in einem Funknetz möglichst zu verbessern.

Diese Aufgabe wird durch ein Verfahren mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Verfahren zum Betrieb eines Knotens in einem Funknetz vorgesehen. Knoten desselben Funknetzes ist eine gemeinsame Netzkennung zugeordnet. Jedem Knoten ist zudem individuell eine Knotenkennung zugeordnet.

In dem Verfahren wird während eines Empfangs eines aktuellen Pakets durch eine Empfangsschaltung des Knotens eine im Paket enthaltene Adresse ermittelt.

Der Empfang des aktuellen Pakets wird fortgesetzt, wenn die ermittelte Adresse mit der Netzkennung des Knotens und der Knotenkennung des Knotens übereinstimmt. Ist das Paket vollständig empfangen kann der Inhalt eines Rahmens des Pakets durch eine Recheneinheit mittels einer in der Recheneinheit implementierten Software ausgewertet werden.

Während des Empfangs des aktuellen Pakets wird der Empfang des aktuellen Pakets abgebrochen und anhand einer Fallentscheidung die Empfangsschaltung gesteuert, wenn die ermittelte Adresse mit der Netzkennung des Knotens oder der Knotenkennung des Knotens nicht übereinstimmt. Die Fallentscheidung erfolgt vorzugsweise in Abhängigkeit von der ermittelten Adresse.

Der Erfindung liegt weiterhin die Aufgabe zu Grunde eine möglichst verbesserte Schattung anzugeben.

Diese Aufgabe wird durch das Verfahren mit den Merkmalen des unabhängigen Anspruchs 7 gelöst. Vorteilhafte Weiterbildungen sind Gegenstand von abhängigen Ansprüchen und in der Beschreibung enthalten.

Demzufolge ist eine Schaltung eines Knotens vorgesehen, der in einem Funknetz eingesetzt wird. Knoten desselben Funknetzes ist eine gemeinsame Netzkennung zugeordnet. Jedem Knoten des Funknetzes ist zudem individuell eine Knotenkennung zugeordnet.

Die Schaltung weist eine analoge/digitale Empfangsschaltung zum Empfang eines aktuellen Pakets auf. Die Empfangsschaltung weist einen Steuereingang zur Steuerung des Empfangs auf. Beispielsweise ist die Empfangsschaltung durch ein Steuersignal an dem Steuereingang ein- und ausschaltbar. Die Empfangsschaltung weist hierzu beispielsweise eine Anzahl Schaltelemente auf, die mit einer Versorgungsspannung verbunden sind. Für den Empfang ist die Empfangsschaltung beispielsweise zum Heruntermischen, zur Demodulation und zur Korrelation eines Empfangssignals ausgebildet.

Die Schaltung weist eine vorzugsweise digitale Auswerteschaltung auf, die mit dem Steuereingang der Empfangsschaltung zur Steuerung des Empfangs verbunden ist. Vorzugsweise weist die Auswerteschaltung eine Logik, insbesondere eine Zustandsmaschine auf, die Funktionen der Auswerteschaltung - beispielsweise die Steuerung der Empfangsschaitung durch Ausgabe eines Steuersignals - ausführt.

Die Auswerteschaltung ist eingerichtet bereits während des Empfangs des aktuellen Pakets eine im Paket enthaltene Adresse zu ermitteln. Zum Ermitteln der Adresse kann die Auswerteschaltung beispielsweise Informationen aus Adressfeldern innerhalb des Pakets auslesen.

Die Empfangsschaltung und die Auswerteschaltung sind eingerichtet den Empfang des aktuellen Pakets fortzusetzen, wenn die ermittelte Adresse mit der Netzkennung des Knotens und der Knotenkennung des Knotens übereinstimmt. Vorzugsweise wird mit oder nach der Bestimmung der Übereinstimmung eine Recheneinheit aufgeweckt, die einen Programmablauf zur Auswertung von Informationen in einem Rahmen des empfangenen Pakets startet.

Die Auswerteschaltung ist eingerichtet die Empfangsschaltung vor einem vollständigen Empfang des aktuellen Pakets zum Abbruch des Empfangs des aktuellen Pakets anzusteuern, wenn die ermittelte Adresse mit der Netzkennung des Knotens oder der Knotenkennung des Knotens nicht übereinstimmt.

Die im Folgenden beschriebenen Weiterbildungen beziehen sich sowohl auf das Verfahren als auch auf die Schaltung. Funktionen der Schaltung sind dabei aus Verfahrensmerkmalen ableitbar.

Gemäß einer bevorzugten Weiterbildungsvariante wird die Empfangsschaltung für den Abbruch des Empfangs des aktuellen Pakets während einer Übertragung des Pakets ggf. an einen anderen Knoten ausgeschaltet. Das Ausschalten der Empfangsschaltung erfolgt, wenn gemäß der Fallentscheidung die ermittelte Adresse mit der Netzkennung und nicht mit der Knotenkennung übereinstimmt. In diesem Fall ist das Paket für einen anderen Knoten desselben Funknetzes bestimmt.

In einer anderen Weiterbildung ist vorgesehen, dass eine Ausschaltdauer anhand einer im Paket enthaltenen Informationen berechnet wird. Vorzugsweise ist die Information der Datenlänge eines Rahmens des Pakets zugeordnet. Vorzugsweise wird die Ausschaltdauer zusätzlich anhand einer Übertragungsrate des Pakets berechnet. Gemäß einer Ausgestaltung wird die Empfangsschaltung mit dem Ende der Ausschaltdauer zum Empfang eingeschaltet.

Gemäß einer Ausgestaltungsvariante wird die Ausschaltdauer zusätzlich anhand einer im Paket enthaltenen Information zu einer Bestätigung berechnet. Die Bestätigung kann auch als Quittierung bezeichnet werden. Die Ausschaltdauer wird im Fall der Bestätigung anhand eines Zeitpunkts einer Rücksendung der Bestätigung berechnet. Bevorzugt ist die Ausschaltdauer durch einen Maximalwert begrenzt. Vorzugsweise ist der Zeitpunkt der Rücksendung der Bestätigung im Funknetz definiert und somit bekannt. Beispielsweise wird der zeitliche Abstand zwischen dem Ende des Pakets und dem Zeitpunkt der Rücksendung der Bestätigung auf Systemebene festgelegt.

Vorzugsweise wird bei einem Abbruch des Empfangs des aktuellen Rahmens eine Recheneinheit - insbesondere ein Mikrocontroller - des Knotens nicht aufgeweckt, wenn die bestimmte Adresse nicht mit der Knotenkennung des Knotens übereinstimmt.

Gemäß einer bevorzugten Weiterbildungsvariante werden Synchronisationsparameter der Empfangsschaltung für den Abbruch des Empfangs des aktuellen Pakets gelöscht, um eine Synchronisation auf eine neue Präambel des eigenen Funknetzes während der Übertragung des Pakets im anderen Funknetz zu starten. Die Synchronisationsparameter der Empfangsschaltung werden daher während der Übertragung des Pakets gelöscht, wenn gemäß der Fallentscheidung die ermittelte Adresse nicht mit der Netzkennung des Knotens übereinstimmt.

Bevorzugt wird zu dieser Weiterbildungsvariante die Empfangsenergie des aktuellen Pakets mit der nicht-übereinstimmender Netzkennung bestimmt. Anhand der bestimmten Empfangsenergie wird vorzugsweise eine obere Schwelle und/oder eine untere Schwelle bestimmt. Bevorzugt ist die obere Schwelle von der ermittelten Empfangsenergie beabstandet. Bevorzugt ist die untere Schwelle von der ermittelten Empfangsenergie beabstandet.

Vorzugsweise wird der Bestimmung der Empfangsenergie nachfolgend eine Synchronisation auf eine neue Präambel gestartet, wenn die aktuelle Empfangsenergie im Übertragungskanal die obere Schwelle überschreitet oder die untere Schwelle unterschreitet. Überschreitet die Empfangsenergie im Übertragungskanal die obere Schwelle sind nur kleine Interferenzen mit dem Signal des fremden Funknetzes zu erwarten. Unterschreitet die Empfangsenergie im Übertragungskanal die untere Schwelle ist die Wahrscheinlichkeit hoch, dass auch ein Sender des eigenen Funknetzes - während einer Sendepause des Senders aus dem Fremdfunknetz - empfangen werden kann. Alternativ kann auch ein Zeitzähler zur Bestimmung der zeitlichen Länge des Pakets mit nicht-übereinstimmender Netzkennung verwendet werden. Dabei wird mit Ablauf des Zeitzählers die Synchronisation auf eine neue Präambel gestartet.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

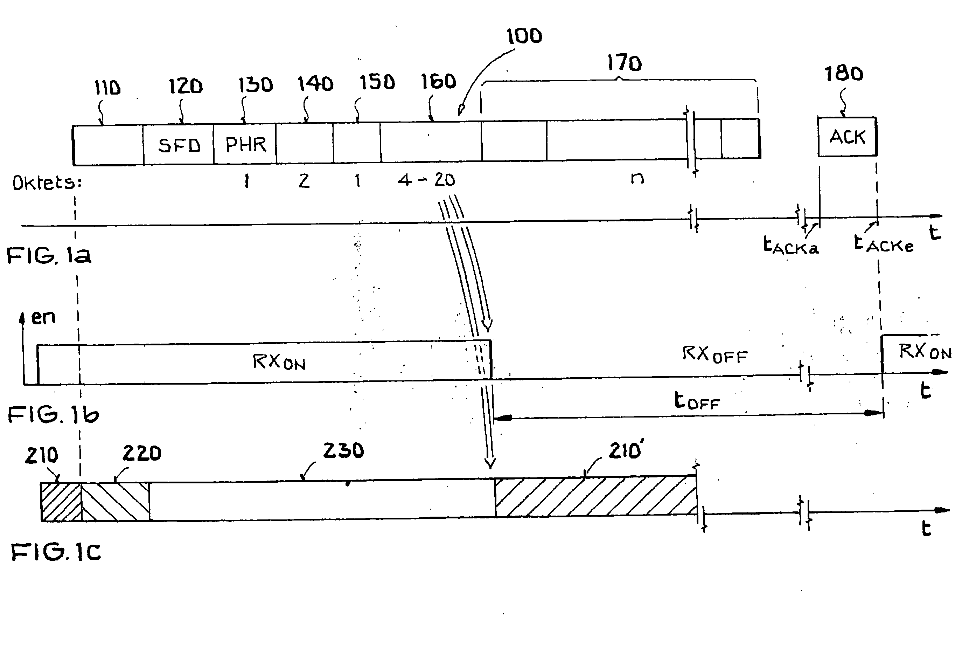

Dabei zeigen
- Fig. 1a: eine schematisches Darstellung eines Pakets,
- Fig. 1 b: eine schematische Darstellung eines Steuersignals,
- Fig. 1c: eine schematische Darstellung von Empfangszuständen,
- Fig. 2: ein schematisches Ablaufdiagramm, und
- Fig. 3: ein schematisches Blockschaltbild einer Schaltung.

In Fig. 1 ist ein Paket 100, wie es in einem Funknetz übertragen wird, schematisch dargestellt. Das Paket 100 weist einen Rahmen mit den Feldern 140, 150, 160 und 170 auf. Die Übertragung des Pakets 100 ist über der Zeit t dargestellt. Dabei wird zuerst eine Präambel 110 (engl. preamble), dann ein Startfeld 120 (SFD - engl. Start of Frame Delimiter), nachfolgend ein Paketkopf 130 (PHR - engl. PHY HeadeR) mit der Information zur Rahmenlänge und nachfolgend ein Rahmen mit den Feldern 140, 150, 160 und 170 übertragen.

Die Darstellung in Fig. 1a ist beispielhaft für ein Paket 100 mit einem Datenrahmen des Industrie-Standards IEEE 802.15.4. Der Datenrahmen weist ein Rahmenkontrollfeld 140 (engl. Frame Control), eine Sequenznummer 150 (engl. Sequence Number) eine Adresse 160 (engl. addressing fields) und weitere Felder 170 mit Nutzdaten mit einer Anzahl von n Oktets auf. Die Nutzdaten sind dabei üblicherweise der überwiegende Umfang des Datenrahmens.

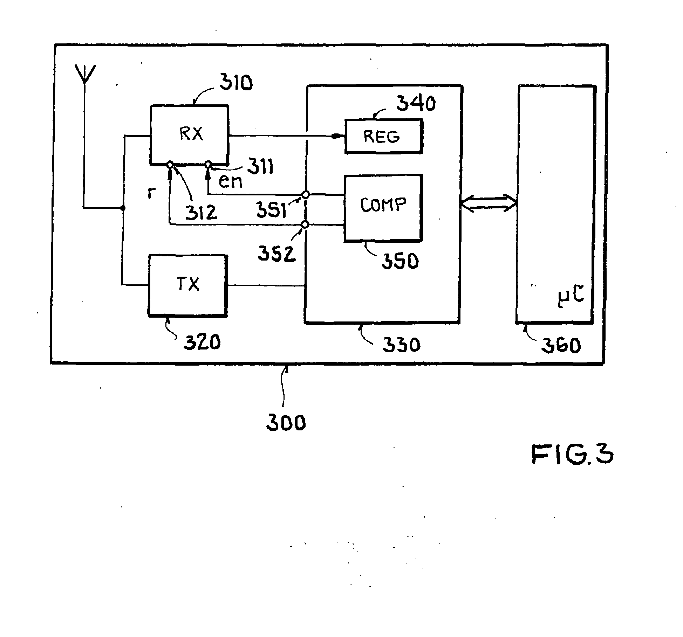

Für das im Folgenden beschriebene Verfahren ist erforderlich, dass das Paket 100 eine Adresse 160 enthält. Die Adresse 160 enthält einen ersten Bestandteil, der eine Zuordnung zum Netzwerk ermöglicht. Hierzu wird beispielsweise der erste Bestandteil der Adresse 160 mit einer im Knoten gespeicherten Netzkennung NWID (Fig. 3) verglichen. Die Adresse 160 enthält einen zweiten Bestandteil, der eine Zuordnung zu genau einem Knoten ermöglicht. Hierzu wird beispielsweise der zweite Bestandteil der Adresse 160 des Pakets 100 mit einer im Knoten gespeicherten Knotenkennung KNID (Fig. 3) verglichen. Die Netzkennung NWID und die Knotenkennung KNID bilden dabei eine eindeutige Identifikation mittels derer genau ein Knoten im Funknetz identifizierbar ist.

Der Industrie-Standard IEEE 802.15.4. definiert weiterhin Pakete mit einem Beacon-Rahmen, einem Bestätigungsrahmen und einem MAC-Befehlsrahmen. Ein Teil der definierten Rahmen erfordert von einem Empfänger eine Bestätigung 180 (ACK - engl. ACKnowledgement) des Empfangs. Die Bestätigung 180 wird, wie in Fig. 1a dargestellt, zwischen den Zeitpunkten tACKa und tACKb vom Empfänger des Rahmens an den Sender zurückgesendet. Andere Pakete anderer Industrie-Standards, wie WLAN, Bluetooth oder WiMax können eine andere Struktur beispielsweise mit einer anderen Reihenfolge der Felder aufweisen, sind aber ebenfalls mit einer Adresse definiert.

Im Folgenden wird davon ausgegangen, dass der Knoten für einen Empfang von Informationen aktiviert ist. Hierzu wird eine Empfängerschaltung 310, wie diese in Fig. 3 dargestellt ist, aktiviert, in dem wie in Fig. 1b dargestellt ein Steuersignal en mittels eines High-Pegels die Empfängerschaltung 310 einschaltet. Ein Empfangsstatus eines empfangenden Knotens wird dadurch in einen Einschaltzustand RXON gesteuert.

Nachfolgend beginnt im Einschaltzustand RXON eine Suchphase 210, wie diese in Fig. 1c dargestellt ist, wobei die Empfängerschaltung versucht sich auf ein Empfangssignal zu synchronisieren. Mit Empfang der Präambel 110 des Pakets 100 führt die Empfangsschaltung eine Frequerizschätzung durch. Synchronisationsparameter, wie Phase, Timing oder Offset werden ermittelt. Für den weiteren Empfang werden die Synchronisationsparameter eingefroren. Die Präambel-Sequenz 110 und das nachfolgende Startfeld 120 (SFD - engl. Start of Frame Delimiter) ermöglichen es dem empfangenden Knoten eine Symbolsynchronisation durchzuführen. Der synchronisierte Zustand definiert eine Übertragungsphase 230 in der die Felder 130, 140, 150 und 160 empfangen werden. Aus dem Paketkopf 130 wird dabei die Länge des nachfolgenden Rahmens (140, 150, 160, 170) ermittelt.

Während des Empfangs eines aktuellen Pakets 100 durch die Empfangsschaltung 310 des Knotens wird die im Paket 100 enthaltene Adresse 160 ermittelt. Anhand der Adresse 160 wird vom empfangenden Knoten eine Fallunterscheidung durchgeführt.

In einem ersten Fall wird ein Empfang des aktuellen Pakets 100 von der Empfangsschaltung 310 fortgesetzt, wenn die ermittelte Adresse 160 mit der Netzkennung NWID des Knotens und der Knotenkennung KNID des Knotens übereinstimmt. In diesem Fall ist das Paket für den empfangenden Knoten selbst bestimmt, so dass die Felder 170 mit den Nutzdaten vom Knoten empfangen und ggf. ausgewertet werden. Zur Auswertung wird beispielsweise eine Recheneinheit 360 (Fig. 3), wie beispielsweise ein Mikrocontroller aufgeweckt.

Wenn die ermittelte Adresse 160 mit der Netzkennung NWID des Knotens oder der Knotenkennung KNID des Knotens nicht übereinstimmt, wird während des Empfangs des aktuellen Pakets 100 der Empfang des aktuellen Pakets 100 durch den Knoten abgebrochen. Die Felder 170 werden durch den Knoten also nicht mehr vollständig empfangen. Zwei aufgrund der ermittelten Adresse mögliche Fälle sind durch die Pfeile von der Adresse 160 in Fig. 1a zu den Figuren 1b und 1c angedeutet. Anhand dieser Fallentscheidung wird die Empfangsschaltung 310 gesteuert.

Wenn gemäß der Fallentscheidung die ermittelte Adresse 160 mit der Netzkennung NWID übereinstimmt und dennoch die Adresse 160 nicht mit der Knotenkennung KNID übereinstimmt, erfolgt eine Reaktion, die in Fig. 1b dargestellt ist. In diesem Fall wird die Empfangsschaltung 310 für den Abbruch des Empfangs des aktuellen Pakets 100 während der weiteren Übertragung des Pakets 100 ausgeschaltet. Im Zusammenhang mit Fig. 1a ist in Fig. 1b dargestellt, dass ein Empfangsstatus des empfangenden Knotens von einem Einschaltzustand RXON in einen Ausschaltzustand RXOFF wechselt. Beispielhaft dargestellt ist ein Steuersignal en, das in Abhängigkeit von der ermittelten Adresse 160 während der Übertragung des Pakets 100 die Empfängerschaltung 310 des Knotens durch einen Low-Pegel ausschaltet. Ein Empfangsstatus des empfangenden Knotens wird dadurch in einen Ausschaltzustand RXOFF gesteuert.

Eine Ausschaltdauer tOFF, in der die Empfangsschaltung 310 ausgeschaltet ist, kann beispielsweise als fester Wert vorgesehen sein. Bevorzugt wird die Ausschaltdauer tOFF von einer Auswerteschaltung 330 (Fig. 3) berechnet. Die Berechnung der Ausschaltdauer tOFF erfolgt anhand der Rahmenlänge, die im Paketkopf 130 definiert ist. Zusätzlich erfolgt die Berechnung der Ausschaltdauer tOFF optional, jedoch vorzugsweise anhand der Übertragungsrate, sofern diese im Funknetz verändert werden kann. Zusätzlich erfolgt die Berechnung der Ausschaltdauer tOFF optional, jedoch vorzugsweise anhand einer im Rahmen enthaltenen Information, ob eine Bestätigung 180 vom Empfänger zurückzusenden ist.

Durch dieses Ausgestaltungsbeispiel gemäß Fig. 1b wird der signifikante Vorteil erzielt, dass während der Ausschaltdauer tOFF, die Stromaufnahme durch die Empfangsschaltung 310 wesentlich reduziert ist. Da die Länge der Felder 170 im Paket 100 bei weitem überwiegt, kann die mittlere Stromaufnahme deutlich reduziert werden, so dass eine Batterielebensdauer eines Knotens, der mit einer Batterie betrieben wird, erhöht wird. Der zeitliche Abstand des Sendezeitpunkts der Bestätigung 180 zum Ende des Pakets 100 ist auf Systemebene festgelegt. Wird die Ausschaltdauer tOFF daher zu einem Zeitpunkt tACKe zum Ende der Bestätigung 180 berechnet, kann der Stromverbrauch zusätzlich reduziert werden.

Wenn gemäß der Fallentscheidung die ermittelte Adresse 160 mit der Netzkennung NWID nicht übereinstimmt, erfolgt eine Reaktion, die in Fig. 1c dargestellt ist. In diesem Fall werden Synchronisationsparameter - wie Phase, Timing oder Frequenzoffset - der Empfangsschaltung 310 während der Übertragung des Pakets 100 gelöscht, was einen Abbruch des Empfangs des Pakets 100 bewirkt. Zur Synchronisation auf eine neue (insbesondere netzeigene) Präambel (in den Figuren 1a, 1b, 1c nicht dargestellt), die zeitgleich während der Übertragung des Pakets im anderen Netz übertragen wird, wird die Suchphase 210' erneut gestartet.

Durch das Löschen der alten Synchronisationsparameter noch während des Empfangs des Pakets des fremden Netzes kann eine Synchronisation auf eine neue Präambel erfolgen. Dies bewirkt den überraschenden Effekt, dass der Knoten mit der Synchronisation auf eine Präambel eines Pakets aus einem fremden Netz nicht für die gesamte Dauer der Übertragung des Pakets des fremden Netzes blind ist für inzwischen gestartete Übertragungen im eigenen Funknetz. Die Verfügbarkeit der Knoten im eigenen Funknetz zur Übertragung ist hierdurch signifikant gesteigert.

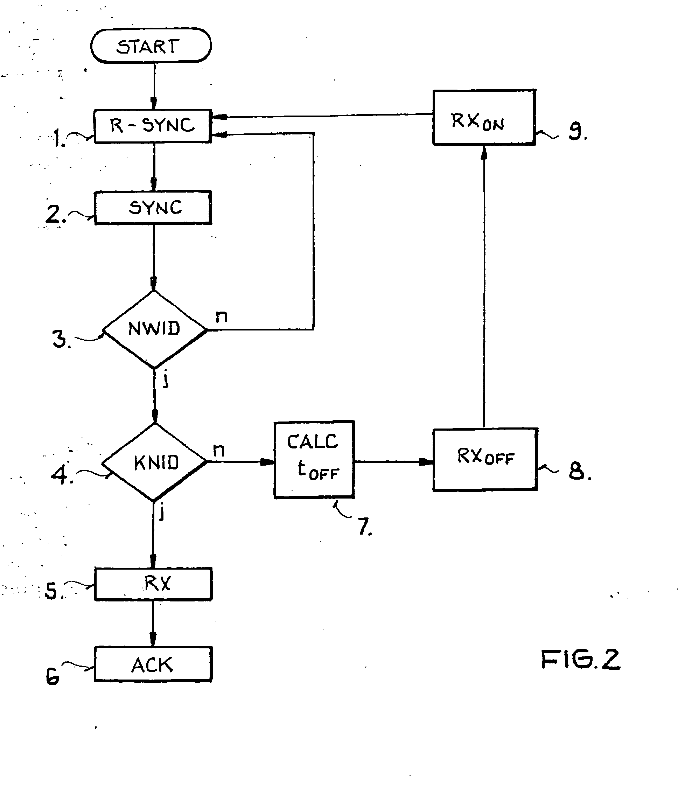

In Fig. 2 ist ein schematisches Ablaufdiagramm für eine Fallentscheidung schematisch dargestellt. Nach einem Start eines Knotens zum Empfang, werden in einem ersten Verfahrenschritt 1 Synchronisationsparameter für den Empfang zurückgesetzt (R-SYNC). In einem zweiten Schritt erfolgt eine Synchronisation 220, SYNC auf eine empfangene Präambel 110 und der Empfang eines Startfeldes 120, eines Paketkopfes 130 und ggf. weiterer Felder 140, 150, sowie einer Adresse 160. Ein Bestandteil der Adresse 160 wird in Schritt 3 mit einer Netzkennung NWID verglichen. Im Fall der Nicht-Übereinstimmung von Adresse 160 und Netzkennung NWID werden in Schritt 1 die Synchronisationsparameter erneut gelöscht.

Im Fall der Übereinstimmung von Adresse 160 und Netzkennung NWID wird in Schritt 4 ein Bestandteil der Adresse 160 mit einer Knotenkennung KNID verglichen. Im Fall der Nicht-Übereinstimmung von Adresse 160 und Knotenkennung KNID wird in Schritt 7 eine Ausschaltdauer tOFF berechnet, ein Timer mit der Ausschaltdauer gestartet, sowie eine Empfangsschaltung 310 (Fig. 3) in Schritt 8 in einen Ausschaltzustand RXOFF versetzt. Im Ausschaltzustand ist der überwiegende Teil der Schaltung des Knotens abgeschaltet. Es ist lediglich erforderlich den Timer mit Strom zu versorgen. Nach Ablauf des Timers wird in Schritt 9 die Empfangsschaltung 310 in einen Einschaltzustand RXON versetzt und im Schritt 1 werden die Synchronisationsparameter erneut gelöscht.

Im Fall der Übereinstimmung von Adresse 160 und Knotenkennung KNID ist das Paket 100 für den Knoten selbst bestimmt und der Knoten empfängt das Paket 100 in Schritt 5. Sofern der mit dem Paket 100 gesendete Rahmen eine Bestätigung erfordert, wird die Bestätigung ACK in Schritt 6 zurück gesendet.

Ein schematischer Blockschaltplan einer Schaltung 300 eines Knotens eines Funknetzes ist in Fig. 3 gezeigt. In der Schaltung 300 ist eine Netzkennung NWID gespeichert, die allen Knoten desselben Funknetzes gemein ist. Zudem ist in der Schaltung 300 eine Knotenkennung gespeichert, die für den Knoten eine individuelle identifikation im Funknetz ermöglicht.

Die Schaltung weist eine Empfangsschaltung 310 zum Empfang eines aktuellen Pakets 100 auf. Die Empfangsschaltung 310 ist zum Empfang mit einer Antenne verbunden. Die Empfangsschaltung 310 weist einen ersten Steuereingang 311 und einen zweiten Steuereingang 312 zur Steuerung des Empfangs auf. Über den ersten Steuereingang 311 ist die Empfangsschaltung 310 mittels eines ersten Steuersignals en ein- und ausschaltbar. Über den zweiten Steuereingang 312 sind Synchronisationsparameter mittels eines zweiten Steuersignals r löschbar. Beide Steuersignale en und r können dabei einen Abbruch des Empfangs des aktuellen Pakets bewirken.

Die Schaltung weist weiterhin eine Auswerteschaltung 330 auf, die über eine Anzahl Steuerausgänge 351, 352 mit dem ersten Steuereingang 311 und dem zweiten Steuereingang 312 der Empfangsschaltung 310 zur Steuerung des Empfangs verbunden ist. Die Auswerteschaltung 330 weist einen Speicher 340, beispielsweise ein Register REG zur Speicherung von im Paket 100 enthaltenen Informationen auf. Die Auswerteschaltung 330 ist eingerichtet während des Empfangs des aktuellen Pakets 100 eine im Paket 100 enthaltene Adresse 160 zu ermitteln. Zur Ermittlung der Adresse und zur Steuerung der Empfangsschaltung 310 weist die Auswerteschaltung 310 eine in Fig. 3 nicht dargestellte Logik, insbesondere eine Zustandsmaschine auf. Die Adresse wird beispielsweise aus dem Speicher 340 ausgelesen.

Weiterhin ist die Auswerteschaltung 330 zur Fallentscheidung eingerichtet. Wenn die ermittelte Adresse 160 mit der in der Auswerteschaltung 330 gespeicherten Netzkennung NWID des Knotens und der Knotenkennung KNID des Knotens übereinstimmt, setzen die Empfangsschaltung 310 und die Auswerteschaltung 330 den Empfang des aktuellen Pakets 100 fort. Zur Prüfung der Übereinstimmung weist die Auswerteschaltung 330 einen digitalen Vergleicher 350 auf. Die Auswerteschaltung 330 weist weiterhin eine Verbindung zu einer Recheneinheit 360 - beispielsweise einem Mikrocontroller - auf. Bei einem positiven Vergleichsergebnis wird die Recheneinheit 360 aufgeweckt.

ist ein Datenrahmen des Pakets vollständig empfangen, werden Daten des Datenrahmens von der Auswerteschaltung 330 zur Recheneinheit 360 übertragen. Die Recheneinheit 360 ist hierbei zur Abarbeitung eines Programmablaufs einer in der Recheneinheit 360 implementierten Software ausgebildet. Die Funktionen der Zustandsmaschine in der Auswerteschaltung 330 können dabei unabhängig von der Abarbeitung der Software in der Recheneinheit 360 genutzt werden. Zudem kann die Auswerteschaltung 330 über die Sendeschaltung 320 eine Bestätigung ACK an den Sender des Pakets 100 zurücksenden.

Wenn die ermittelte Adresse 160 mit der Netzkennung NWID des Knotens oder der Knotenkennung KNID des Knotens nicht übereinstimmt, ist die Auswerteschaltung 330 zum Abbruch des Empfangs des aktuellen Pakets 100 durch eine Ausgabe eines Steuersignals en oder r an die Empfangsschaltung 310 ausgebildet. Die Ansteuerung der Empfangsschaltung 310 durch die Auswerteschaltung 330 erfolgt dabei noch während der Übertragung des aktuellen Pakets 100. Ein vollständiger Empfang des aktuellen Pakets 100 erfolgt in diesem Fall nicht.

Die Erfindung ist nicht auf die dargestellten Ausgestaltungsvarianten der Figuren 1a bis 3 beschränkt. Beispielsweise ist es möglich den Vergleich des Adresse mit der Netzkennung NWID und der Knotenkennung KNID zeitgleich durchzuführen. Die Funktionalität der Schaltung gemäß Fig. 3 kann besonders vorteilhaft für ein Funknetz nach einem Industrie-Standard, wie WLAN oder WiMax verwendet werden. Bevorzugt wird die Funktion für einen batteriebetriebenen Knoten eines Funknetzes nach dem Industrie-Standard IEEE 802.15.4 verwendet.

### Bezugszeichenliste

- 100: Paket
- 110: Präambel
- 120, SFD: Startfeld
- 130, PHR: Längenfeld
- 140: Rahmenkontrollfeld
- 150: Sequenznummer
- 160: Adresse
- 170: Feld mit Nutzdaten
- 180: Bestätigung
- 210, 210': Suchphase
- 220, SYNC: Synchronisationsphase
- 230: Übertragungsphase
- 300: Schaltung
- 310: Empfangsschaltung
- 311, 312: Steuereingang
- 320: Sendeschaltung
- 330: Auswerteschaltung
- 340: Register
- 350: Vergleicher, Timer
- 351,352: Steuerausgang
- 360: Recheneinheit, Mikrocontroller
- r, en: Steuersignal
- RXON: Einschaltzustand
- RXOFF: Ausschaltzustand
- tOFF: Ausschaltdauer
- tACKa, tACKe: Zeitpunkt
- t: Zeit
- n: Nutzdatenlänge
- R-SYNC: Rücksetzen
- NWID: Netzkennung
- KNID: Knotenkennung
- RX: Empfang

## Patentansprüche

1. Verfahren zum Betrieb eines Knotens in einem Funknetz, wobei Knoten desselben Funknetzes eine gemeinsame Netzkennung (NWID) und jedem Knoten individuell eine Knotenkennung (KNID) zugeordnet ist,
- bei dem während des Empfangs eines aktuellen Pakets (100) durch eine Empfangsschaltung (310) des Knotens eine im Paket (100) enthaltene Adresse (160) ermittelt wird,
- bei dem ein Empfang des aktuellen Pakets (100) fortgesetzt wird, wenn die ermittelte Adresse (160) mit der Netzkennung (NWID) des Knotens und der Knotenkennung (KNID) des Knotens übereinstimmt,
- bei dem während des Empfangs des aktuellen Pakets (100) der Empfang des aktuellen Pakets abgebrochen und anhand einer Fallentscheidung die Empfangsschaltung (310) gesteuert wird, wenn die ermittelte Adresse (160) mit der Netzkennung (NWID) des Knotens oder der Knotenkennung (KNID) des Knotens nicht übereinstimmt.

2. Verfahren nach Anspruch 1,
- bei dem die Empfangsschaltung (310) für den Abbruch des Empfangs des aktuellen Pakets (100) ausgeschaltet wird, wenn gemäß der Fallentscheidung die ermittelte Adresse (160) mit der Netzkennung (NWID) und nicht mit der Knotenkennung (KNID) übereinstimmt.

3. Verfahren nach Anspruch 2,
- bei dem eine Ausschaltdauer (tOFF) anhand einer im Paket (100) enthaltenen Informationen (130) zur Datenlänge eines Rahmens (140, 150, 160, 170) des Pakets (100) berechnet wird, und
- die Empfangsschaltung (310) mit dem Ende der Ausschaltdauer (tOFF) zum Empfang eingeschaltet wird.

4. Verfahren nach Anspruch 3,
- bei dem die Ausschaltdauer (tOFF) zusätzlich anhand einer im Paket (100) enthaltenen Information zu einer Bestätigung (ACK, 180) mittels eines Zeitpunkts (tACKa, tACKe) einer Rücksendung der Bestätigung (ACK, 180) berechnet wird.

5. Verfahren nach einem der Ansprüche 3 oder 4,
- bei dem die Ausschaltdauer (tOFF) durch einen Maximalwert begrenzt wird.

6. Verfahren nach einem der vorhergehenden Ansprüche,
- bei dem Synchronisationsparameter der Empfangsschaltung (310) für den Abbruch des Empfangs des aktuellen Pakets (100) zur Synchronisation auf eine neue Präambel gelöscht werden, wenn gemäß der Fallentscheidung die ermittelte Adresse (160) nicht mit der Netzkennung (NWID) des Knotens übereinstimmt.

7. Verfahren nach Anspruch 6,
- bei dem die Empfangsenergie des aktuellen Pakets (100) mit nicht-übereinstimmender Netzkennung (NWID) bestimmt und anhand der bestimmten Empfangsenergie eine obere Schwelle und/oder eine untere Schwelle bestimmt wird, und
- bei dem nachfolgend eine Synchronisation auf eine neue Präambel gestartet wird, wenn die aktuelle Empfangsenergie im Übertragungskanal die obere Schwelle überschreitet oder die untere Schwelle unterschreitet.

8. Schaltung (300) eines Knotens in einem Funknetz, wobei Knoten desselben Funknetzes eine gemeinsame Netzkennung (NWID) und jedem Knoten individuell eine Knotenkennung (KNID) zugeordnet ist,
- mit einer Empfangsschaltung (310) zum Empfang eines aktuellen Pakets (100), die einen Steuereingang (311, 312) zur Steuerung des Empfangs aufweist,
- mit einer Auswerteschaltung (330), die mit dem Steuereingang (311, 312) der Empfangsschaltung (310) zur Steuerung des Empfangs verbunden ist,
- bei der die Auswerteschaltung (330) eingerichtet ist während des Empfangs des aktuellen Pakets (100) eine im Paket (100) enthaltene Adresse (160) zu ermitteln,
- bei dem die Empfangsschaltung (310) und die Auswerteschaltung (330) eingerichtet ist den Empfang des aktuellen Pakets (100) fortzusetzen,
wenn die ermittelte Adresse (160) mit der Netzkennung (NWID) des Knotens und der Knotenkennung (KNID) des Knotens übereinstimmt,
- bei dem die Auswerteschaltung (330) eingerichtet ist die Empfangsschaltung (310) zum Abbruch des Empfangs des aktuellen Pakets (100) anzusteuern,
wenn die ermittelte Adresse (160) mit der Netzkennung (NWID) des Knotens oder der Knotenkennung (KNID) des Knotens nicht übereinstimmt.
